(19) Europäisches Patentamt
European Patent Office
Office européen des brevets

(11) EP 4 306 573 A1

# (12) EUROPEAN PATENT APPLICATION
published in accordance with Art. 153(4) EPC

(43) Date of publication:
**17.01.2024 Bulletin 2024/03**

(21) Application number: **22766792.0**

(22) Date of filing: **21.02.2022**

(51) International Patent Classification (IPC):
***C08H 7/00*** *(2011.01)* ***H01M 4/62*** *(2006.01)*

(52) Cooperative Patent Classification (CPC):
**C08H 6/00; H01M 4/62;** Y02E 60/10

(86) International application number:
**PCT/JP2022/006805**

(87) International publication number:
**WO 2022/190829 (15.09.2022 Gazette 2022/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.03.2021 JP 2021036680**

(71) Applicant: **Nippon Paper Industries Co., Ltd.**
**Tokyo 114-0002 (JP)**

(72) Inventors:
- **SHINDO, Hiroki**
  **Tokyo 114-0002 (JP)**
- **NISHIMORI, Yoshito**
  **Tokyo 114-0002 (JP)**
- **AIMI, Hikaru**
  **Tokyo 114-0002 (JP)**
- **KAWAMURA, Masanobu**
  **Tokyo 114-0002 (JP)**

(74) Representative: **Kuhnen & Wacker**
**Patent- und Rechtsanwaltsbüro PartG mbB**
**Prinz-Ludwig-Straße 40A**
**85354 Freising (DE)**

## (54) ORGANIC ANTI-SHRINKAGE AGENT FOR LEAD-ACID BATTERIES

(57) An organic expander for lead storage batteries contains sulfomethylated kraft lignin. The sulfomethylated kraft lignin has an organic S content of 1.5 to 3.8% by mass.

EP 4 306 573 A1

## Description

[Technical field]

The present invention relates to an organic expander for lead storage batteries.

[Background Art]

Since a lead storage battery is relatively inexpensive and has stable performance as a secondary battery, the lead storage battery has been widely used as a battery for an automobile, a battery for a portable device, a battery for backup of a computer, and a battery for communication, and the like.

When the lead storage battery changes from a discharged state to a charged state while charge and discharge are repeated, a negative electrode active material contracts, which causes a decrease in the specific surface area of the negative electrode active material, and therefore the discharge performance of the lead storage battery deteriorates. In the negative electrode active material, metal lead emits electrons and changes to lead sulfate in a discharge reaction. In a charge reaction, lead sulfate obtains electrons and changes to metal lead. However, when lead sulfate is coarsened, lead sulfate is hardly dissolved in the charge reaction, resulting in deterioration in charging performance.

It has been proposed to add lignin extracted from wood as an organic expander to be added to the negative electrode active material of the lead storage battery in order to prevent the shrinkage of the negative electrode active material (Patent Literature 1).

Several types of lignins have been disclosed as lignin for lead storage batteries (Patent Literatures 2 and 3).

[Citation List]

[Patent Literature]

Patent Literature 1: JP 62-145655 A
Patent Literature 2: JP 2006-196191 A
Patent Literature 3: JP 2007-165273 A

[Summary of Invention]

[Technical Problem]

A lead storage battery is required to have various performances. In general, when lignin is added to the negative electrode of the lead storage battery, the lead storage battery can obtain an effect such as improvement in low-temperature rapid discharge performance or suppression of sulfation, but the lead storage battery has a problem that charge acceptance is deteriorated due to its nature.

An object of the present invention is to provide an organic expander for lead storage batteries excellent in balance among life, capacity, and discharge characteristics while maintaining the charge acceptance of the lead storage battery described above.

[Solution to Problem]

[1] An organic expander for lead storage batteries contains sulfomethylated kraft lignin, in which the sulfomethylated kraft lignin has an organic S content of 1.5 to 3.8% by mass.

[2] The organic expander for lead storage batteries according to (1), in which the organic expander has a weight average molecular weight of 16,000 or less.

[3] The organic expander for lead storage batteries according to [1], in which the organic expander has the organic S content of 1.5 to 3.0% by mass, and a weight average molecular weight of 16,000 or less.

[4] A method for producing the organic expander for lead storage batteries according to [2], the method including the step of sulfomethylating kraft lignin.

[5] A method for producing the organic expander for lead storage batteries according to [3], the method including the step of sulfomethylating kraft lignin.

[Advantageous Effects of Invention]

According to the present invention, it is possible to provide an organic expander excellent in balance among life, capacity, and discharge characteristics while maintaining the charge acceptance of a lead storage battery.

[Description of Embodiments]

Hereinafter, the present invention will be described in detail in accordance with preferred embodiments thereof. However, the present invention is not limited to the following embodiments at all. In the present invention, "to" includes an end value. That is, "X to Y" includes values X and Y at both ends thereof.

An organic expander for lead storage batteries of the present invention contains sulfomethylated kraft lignin. The sulfomethylated kraft lignin has an organic S content of 1.5 to 3.8% by mass.

As the lignin used in the organic expander of the present invention, sulfomethylated kraft lignin obtained by introducing a sulfonic acid group into kraft lignin by sulfomethylation is used.

(Kraft lignin)

Kraft lignin is also called thiolignin or sulphatelignin. As the kraft lignin, prepared one may be used, or a commercially available product may be used. Examples of a method for preparing kraft lignin include a method in which kraft lignin is obtained from an alkali solution of kraft lignin, a method in which powdered kraft lignin is obtained by spray-drying an alkali solution of kraft lignin, and a method in which an alkali solution of kraft lignin is precipitated with an acid to obtain acid-precipitated kraft lignin.

The alkali solution of kraft lignin can be obtained by, for example, known methods as described in JP 2000-336589 A, but the present invention is not limited to these methods.

As the wood of a raw material, for example, hardwood, softwood, a miscellaneous small tree, bamboo, kenaf, bagasse, or an empty fruit brunch obtained after palm oil extraction can be used.

As the acid-precipitated kraft lignin obtained by precipitating the alkali solution of kraft lignin with an acid, powdery acid-precipitated kraft lignin obtained by a method described in WO 2006/038863, WO 2006/031175, or WO 2012/005677 can be used, but the present invention is not limited to these methods.

(Sulfomethylated kraft lignin)

The sulfomethylated kraft lignin used in the present invention has an organic S content of 1.5 to 3.8% by mass, and more preferably 1.5 to 3.0% by mass. When the organic S content is excessively more than the above upper limit value, charge acceptance may be deteriorated, and when the organic S content is excessively smaller than the above lower limit value, capacity, discharge characteristics, and life may be deteriorated.

The organic S content included in sulfomethylated kraft lignin in the present invention refers to the total amount of sulfur atoms contained in the sulfonic acid (salt) group represented by $-SO_3M$ (wherein M represents a hydrogen atom, a monovalent metal salt, or a divalent metal salt) with respect to the solid content of lignin and sulfur atoms contained in a kraft lignin skeleton with respect to the solid content of lignin. More specifically, the organic S content is a value calculated from the following Equation (1).

Equation (1):

Organic S content of sulfomethylated kraft lignin (% by mass) = total S content (% by mass) - inorganic S content (% by mass)

(In Equation (1), the S content represents the S content with respect to the solid content of lignin in any case.)

In Equation (1), the total S content is the total S content contained in a lignin derivatised product, and can be quantified by ICP emission spectrometry. An inorganic S content can be calculated as the total amount of a $SO_3$ content, a $S_2O_3$ content, and a $SO_4$ content quantified by ion chromatography. However, the inorganic S content is not calculated based on the content of the oxide itself, but is calculated based on the content of S in the oxide.

In the sulfomethylation reaction of kraft lignin, a sulfonic acid (salt) group is generally introduced into a $C_6$-$C_3$ unit of lignin at a position represented by the following general formula (1). The general formula (1) represents a $C_6$-$C_3$

unit which is a partial structure of lignin. That is, in a reaction indicated by a left arrow, a sulfonic acid (salt) group is introduced at an α-position, and the reaction is generally called sulfonation. Meanwhile, in a reaction indicated by a right arrow, a sulfonic acid (salt) group is introduced into the 5-position of an aromatic nucleus via formaldehyde in addition to the α-position.

[Chemical Formula 1]

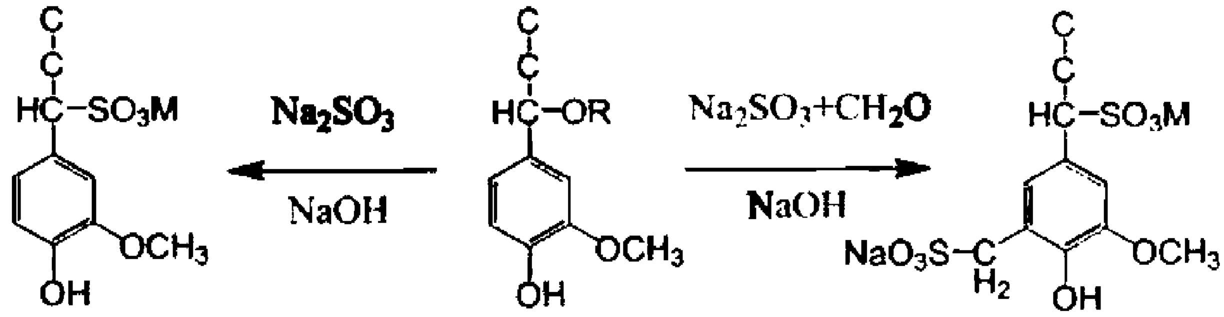


・・(1)

(In the general formula (1), M represents a hydrogen atom, a monovalent metal salt, or a divalent metal salt.)

The sulfomethylated kraft lignin may be produced by a known method, and can be produced, for example, by reacting kraft lignin with a sulfite and an aldehyde.

An example of a method of sulfomethylating lignin is disclosed in U.S. Patent No. 2,680,113. In this method, the sulfomethylation reaction of lignin is carried out in a temperature range of 50 to 200°C, and preferably in a temperature range of 90 to 170°C. The pH during the sulfomethylation reaction is preferably 8 or more.

The amount of a sulfite to be added is preferably 2.0 to 16.0% by mass, and more preferably 2.0 to 11.0% by mass, with respect to the solid content of a lignin. When the added amount of the sulfite is less than the above range, sulfone groups are not introduced into lignin. Meanwhile, when a sulfite is excessively added, sulfone groups are excessively introduced into lignin, and therefore charge acceptance may be deteriorated.

The aldehyde is preferably formaldehyde. The amount of the aldehyde to be added is preferably 0.5 to 4.0% by mass, and more preferably 0.5 to 3.0% by mass, with respect to the solid content of the lignin. If the amount of formaldehyde is not in the above range, no sulfone groups are introduced into lignin.

The weight average molecular weight of the sulfomethylated kraft lignin used in the present invention is preferably 8,000 or more and 16,000 or less. When the weight average molecular weight is larger than the above upper limit, charge acceptance may be deteriorated.

In the present invention, the weight average molecular weight is measured by gel permeation chromatography (GPC). Measurement of GPC may be performed by a known method for pullulan conversion under the following conditions.

Measuring device; Manufactured by Tosoh Corporation
Used column; Shodex Column OH-pak SB-806HQ, SB-804HQ, SB-802 . 5HQ
Eluent; Aqueous solution of 1.0% of Na tetraborate and 0.3% of isopropyl alcohol
Eluent flow rate; 1.00 mL/min
Column temperature; 50°C
Measurement sample concentration; 0.2% by mass
Standard substance; Pullulan (manufactured by Showa Denko K.K.)
Detector; RI detector (manufactured by Tosoh Corporation)
Calibration curve; Pullulan reference

The organic expander of the present invention is mainly added to a negative electrode plate of a lead storage battery. The addition rate of the solid content of the organic expander is usually 0.02 to 1.0% by mass with respect to a lead powder.

The lead storage battery using the organic expander for lead storage batteries of the present invention can be used for a battery for an automobile, a battery for a portable device, a battery for backup of a computer, and a battery for communication, and the like.

[Examples]

Hereinafter, the present invention will be described more specifically with reference to Examples, but the present invention is not limited to the following Examples as a matter of course, and can be implemented with appropriate modifications within a range that can be adapted to the gist described above and below. All of them are included in the technical scope of the present invention. In the examples, unless otherwise specified, % represents % by mass, and parts represent parts by weight.

A charge reaction (formula (1)) and a discharge reaction (formula (2)) in the negative electrode of a lead storage battery are shown below.

[Chemical Formula 2]

.

FORMULA (1) $PbSO_4 \rightarrow Pb^{2+} + SO_4^{2-} Pb^{2+} + 2e^- \rightarrow Pb$

.

FORMULA (2): $Pb \rightarrow Pb^{2+} + 2e^- Pb^{2+} + SO_4^{2-} \rightarrow PbSO_4$

<Cyclic voltammetry method>

Examples in the present invention were performed by a cyclic voltammetry (CV) method using a three-electrode system of a working electrode, a counter electrode, and a reference electrode. In the CV method, a CV curve (vertical axis: potential, horizontal axis: current) is obtained by reciprocating the potential of the working electrode in a certain range and observing a current at that time. When the potential of the electrode is positively scanned, electron transfer occurs from a reductant near the electrode, to cause an oxidation current to flow. When the electron transfer proceeds and most of it becomes an oxidant, the oxidation current decreases to form an upwardly convex peak in the CV curve. When the potential is negatively scanned, the electron transfer occurs from the electrode to the oxidant, to cause a reduction current to flow. Eventually, the reduction current decreases, to form a downward convex peak. When the potential is repeatedly scanned, the oxidation reaction and the reduction reaction can be repeated. When the reduction current flows on the surface of a lead working electrode, the charge reaction shown by the above formula (1) occurs. When the oxidation current flows, the discharge reaction shown by the above formula (2) occurs. The area of the oxidation current in the CV curve corresponds to the amount of discharge in the negative electrode, and the area of the reduction current corresponds to the amount of charge in the negative electrode.

<Experimental conditions for cyclic voltammetry>

Cell: Plate electrode evaluation cell VM-2S (manufactured by EC Frontier Co., Ltd.)
Working electrode: Lead flat plate (manufactured by Standard Test Piece Co., Ltd., plate thickness: 0.5 mm, radius: 2.5 mm, purity: 99.99%)
Counter electrode: Lead flat plate (manufactured by Standard Test Piece Co., Ltd., plate thickness: 0.5 mm, purity: 99.99%)
Reference electrode: Ag/AgCl reference electrode (manufactured by EC Frontier Co., Ltd.)
Electrolytic solution: 37% diluted sulfuric acid (specific gravity: 1.270 (25 °C)) obtained by dissolving an organic expander (Examples and Comparative Examples) in an amount of 20 ppm
Pretreatment: -700 mV, 30 min
Potential width: -700 mV , 0 mV $\rightarrow$ -1000 mV , -700 mV (1 cycle)
Sweep rate: 50 mV/min
Number of cycles: 8,000

<Separation of kraft lignin>

Kraft lignin was separated by a known method. That is, carbon dioxide was passed through softwood kraft cooking black liquor to lower the pH of the black liquor to 10, and primary filtration was performed. The resultant was redispersed in water again, the pH was lowered to 2 with sulfuric acid, and secondary filtration was performed. The

resultant was washed with water, and then dried to obtain softwood kraft lignin.

<Production Example 1>

A 1 L autoclave equipped with a thermometer, a stirrer, and a reflux condenser was charged with 500 parts of a solution obtained by dissolving softwood kraft lignin with NaOH at pH 10 so as to have a solid content of 17%, 12.8 parts of sodium sulfite, and 9.0 parts of a 37% formaldehyde solution, and the mixture was reacted at 140°C for 120 minutes under stirring. After cooling to room temperature, softwood sulfomethylated kraft lignin (A-1) was obtained.

<Production Example 2>

A 1 L autoclave equipped with a thermometer, a stirrer, and a reflux condenser was charged with 500 parts of a solution obtained by dissolving softwood kraft lignin with NaOH at pH 10 so as to have a solid content of 17%, 8.5 parts of sodium sulfite, and 6.0 parts of a 37% formaldehyde solution, and the mixture was reacted at 130°C for 120 minutes under stirring. After cooling to room temperature, softwood sulfomethylated kraft lignin (A-2) was obtained.

<Production Example 3>

A 1 L autoclave equipped with a thermometer, a stirrer, and a reflux condenser was charged with 500 parts of a solution obtained by dissolving softwood kraft lignin with NaOH at pH 10 so as to have a solid content of 17%, 8.5 parts of sodium sulfite, and 6.0 parts of a 37% formaldehyde solution, and the mixture was reacted at 170°C for 240 minutes under stirring. After cooling to room temperature, softwood sulfomethylated kraft lignin (A-3) was obtained.

<Production Example 4>

A 1 L autoclave equipped with a thermometer, a stirrer, and a reflux condenser was charged with 500 parts of a solution obtained by dissolving softwood kraft lignin with NaOH at pH 10 so as to have a solid content of 17%, 4.3 parts of sodium sulfite, and 3.0 parts of a 37% formaldehyde solution, and the mixture was reacted at 160°C for 120 minutes under stirring. After cooling to room temperature, softwood sulfomethylated kraft lignin (A-4) was obtained.

<Production Example 5>

A 1 L autoclave equipped with a thermometer, a stirrer, and a reflux condenser was charged with 500 parts of a solution obtained by dissolving softwood kraft lignin with NaOH at pH 10 so as to have a solid content of 17%, 2.1 parts of sodium sulfite, and 1.5 parts of a 37% formaldehyde solution, and the mixture was reacted at 150°C for 120 minutes under stirring. After cooling to room temperature, softwood sulfomethylated kraft lignin (A-5) was obtained.

<Production Example 6>

A 1 L autoclave equipped with a thermometer, a stirrer, and a reflux condenser was charged with 500 parts of a solution obtained by dissolving softwood kraft lignin with NaOH at pH 10 so as to have a solid content of 17%, 3.2 parts of sodium sulfite, and 2.3 parts of a 37% formaldehyde solution, and the mixture was reacted at 140°C for 120 minutes under stirring. After cooling to room temperature, softwood sulfomethylated kraft lignin (A-6) was obtained.

<Production Example 7>

A glass reaction vessel equipped with a thermometer, a stirrer, and a reflux apparatus was charged with 500 parts of a solution obtained by dissolving softwood kraft lignin with NaOH at pH 10 so as to have a solid content of 17%, 3.2 parts of sodium sulfite, and 2.3 parts of a 37% formaldehyde solution, and the mixture was reacted at 95°C for 24 hours under stirring. After cooling to room temperature, softwood sulfomethylated kraft lignin (A-7) was obtained.

<Comparative Example 1>

Softwood kraft lignin was dissolved with NaOH at pH 10 so as to have a solid content of 17% to obtain an softwood kraft lignin solution (B-1).

<Comparative Example 2>

According to the method described in Examples of WO 2012/005677, precipitated kraft lignin was obtained from a broad-leaved tree kraft cooking black liquor instead of a coniferous tree kraft cooking black liquor. The precipitated kraft lignin thus obtained was dissolved with 48% NaOH to obtain a kraft lignin solution having a pH of 10 and a solid content concentration of 20%.

A stainless steel reaction vessel equipped with a thermometer, a stirrer, and a reflux apparatus was charged with 100 parts of the obtained kraft lignin solution, 400 parts of water, 7.0 parts of a 37% formaldehyde solution (manufactured by Wako Pure Chemical Industries, Ltd.), and 10 parts of sodium sulfite (manufactured by Wako Pure Chemical Industries, Ltd.), and the temperature was raised to 140°C under stirring. After the temperature was raised, the mixture was reacted for 2 hours while being maintained at 140°C. Thereafter, the mixture was cooled to obtain a sulfomethylated kraft lignin solution having a pH of 10 and a solid content concentration of 20%, followed by spray-drying to obtain powdered lignin (B-2).

<Comparative Example 3>

A 1 L autoclave equipped with a thermometer, a stirrer, and a reflux condenser was charged with 500 parts of a solution obtained by dissolving softwood kraft lignin with NaOH at pH 10 so as to have a solid content of 17%, 17.0 parts of sodium sulfite, and 12.0 parts of a 37% formaldehyde solution, and the mixture was reacted at 140°C for 120 minutes under stirring. After cooling to room temperature, softwood sulfomethylated kraft lignin (B-3) was obtained.

<Comparative Example 4>

A glass reaction vessel equipped with a thermometer, a stirrer, and a reflux apparatus was charged with 500 parts of a solution obtained by dissolving softwood kraft lignin with NaOH at pH 10 so as to have a solid content of 17%, 17.0 parts of sodium sulfite, and 12.0 parts of a 37% formaldehyde solution, and the mixture was reacted at 100°C for 24 hours under stirring. After cooling to room temperature, softwood sulfomethylated kraft lignin (B-4) was obtained.

<Comparative Example 5>

VANILLEX N (hereinafter, referred to as B-5, manufactured by Nippon Paper Industries Co., Ltd., concentration: 95%, main component: partially desulfonated sulfite lignin) was used.

The compositions of sulfomethylated kraft lignins obtained in Production Examples 1 to 7, and kraft lignins, sulfomethylated kraft lignins and partially desulfonated sulfite lignin of Comparative Examples 1 to 5 are shown in Table 1.

[Table 1]

| Production Example | | Organic S content (%) | Weight average molecular weight (RI) |
|---|---|---|---|
| Production Example 1 | A-1 | 3.7 | 15,200 |
| Production Example 2 | A-2 | 2.9 | 13,800 |
| Production Example 3 | A-3 | 2.9 | 18,800 |
| Production Example 4 | A-4 | 2.2 | 11,200 |
| Production Example 5 | A-5 | 1.6 | 10,200 |
| Production Example 6 | A-6 | 1.9 | 10,000 |
| Production Example 7 | A-7 | 1.9 | 8,500 |
| Comparative Example 1 | B-1 | 1.3 | 8,100 |
| Comparative Example 2 | B-2 | 1.4 | 8,200 |
| Comparative Example 3 | B-3 | 4.6 | 16,100 |
| Comparative Example 4 | B-4 | 4.6 | 14,000 |
| Comparative Example 5 | B-5 | 2.7 | 12,100 |

In Table 1, % represents % by mass with respect to the solid content of the composition obtained in each

Production Example.

<Method for analyzing CV test result>

The number of cycles at which a charge/discharge amount reached a maximum value and a maximum discharge amount at that time were determined, and a value obtained by dividing the maximum value of a charge current in the CV curve at the 2,000th cycle by a charge amount was defined as charge acceptance.

The cyclic voltammetry test results of the sulfomethylated kraft lignins obtained in Production Examples 1 to 7 and kraft lignins, sulfomethylated kraft lignins and partially desulfonated sulfite lignin obtained in Comparative Examples 1 to 5 are shown in Table 2 as Examples 1 to 7 and Comparative Examples 1 to 5.

[Table 2]

| | | | Corresponding real battery performance | | |
|---|---|---|---|---|---|
| | | | Life | Capacity/ discharge characteristics | Charge acceptance |
| | Organic expander | | Evaluation items of electrochemical test | | |
| | | | Number of cycles at which charge/discharge amount is maximized | Maximum discharge amount (C/m$^2$) | Charge acceptance (%) (at 2,000th cycle in CV) |
| Example 1 | Production Example 1 | A-1 | 4,500 | 6,100 | 98 |
| Example 2 | Production Example 2 | A-2 | 4,300 | 5,800 | 101 |
| Example 3 | Production Example 3 | A-3 | 3,600 | 5,700 | 98 |
| Example 4 | Production Example 4 | A-4 | 4,100 | 5,900 | 101 |
| Example 5 | Production Example 5 | A-5 | 3,800 | 5,800 | 106 |
| Example 6 | Production Example 6 | A-6 | 4,200 | 6,200 | 105 |
| Example 7 | Production Example 7 | A-7 | 4,400 | 6,200 | 109 |
| Comparative Example 1 | Comparative Example 1 | B-1 | 2,400 | 4,600 | 100 |
| Comparative Example 2 | Comparative Example 2 | B-2 | 2,600 | 5,000 | 100 |
| Comparative Example 3 | Comparative Example 3 | B-3 | ≧ 8,000 | ≧ 7,200 | 87 |
| Comparative Example 4 | Comparative Example 4 | B-4 | ≧ 8,000 | ≧ 7,400 | 89 |
| Comparative Example 5 | Comparative Example 5 | B-5 | 4,500 | 6,300 | 91 |

In Table 2, % represents a performance difference when the performance of Comparative Example 1 (B-1) is 100%.

As shown in Table 2, in Examples 1 to 4 (A-1 to A-4) included in the range of the organic expander for lead storage batteries of the present invention, as compared with the organic expanders for lead storage batteries of Comparative Example 1 (B-1) and Comparative Example 2 (B-2), the number of cycles at which the charge/discharge amount

was maximized and the maximum discharge amount were improved, and the charge acceptance was almost the same. Examples 1 to 4 were superior to Comparative Examples 3 to 5 (B-3 to B-5) in charge acceptance, and was superior in the balance between the number of cycles at which the charge/discharge amount was maximized and the maximum discharge amount, and the charge acceptance. In addition, in Examples 5 to 7 (A-5 to A-7) included in the range of the organic expanders for lead storage batteries of the present invention, as compared with the organic expanders for lead storage batteries of Comparative Example 1 (B-1) and Comparative Example 2 (B-2), all of the number of cycles at which the charge/discharge amount was maximized, the maximum discharge amount and the charge acceptance were improved. The charge acceptance was excellent as compared with Comparative Examples 3 to 5, and the balance between the number of cycles at which the charge/discharge amount was maximized, the maximum discharge amount and the charge acceptance was excellent.

## Claims

1. An organic expander for lead storage batteries comprising sulfomethylated kraft lignin,
   wherein the sulfomethylated kraft lignin has an organic S content of 1.5 to 3.8% by mass.

2. The organic expander for lead storage batteries according to claim 1, wherein the organic expander has a weight average molecular weight of 16,000 or less.

3. The organic expander for lead storage batteries according to claim 1, wherein the organic expander has the organic S content of 1.5 to 3.0% by mass, and a weight average molecular weight of 16,000 or less.

4. A method for producing the organic expander for lead storage batteries according to claim 2, the method comprising the step of sulfomethylating kraft lignin.

5. A method for producing the organic expander for lead storage batteries according to claim 3, the method comprising the step of sulfomethylating kraft lignin.

**INTERNATIONAL SEARCH REPORT**

International application No.
**PCT/JP2022/006805**

**A. CLASSIFICATION OF SUBJECT MATTER**

***C08H 7/00***(2011.01)i; ***H01M 4/62***(2006.01)i
FI: H01M4/62 B; C08H7/00

According to International Patent Classification (IPC) or to both national classification and IPC

**B. FIELDS SEARCHED**

Minimum documentation searched (classification system followed by classification symbols)

C08H7/00; H01M4/62

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2020/013112 A1 (NIPPON PAPER INDUSTRIES CO., LTD.) 16 January 2020 (2020-01-16)<br>paragraphs [0048]-[0066], [0079], [0085], [0095] | 1 |
| Y | paragraphs [0048]-[0066], [0079], [0085], [0095] | 2–5 |
| Y | JP 2015-225719 A (GS YUASA CORP) 14 December 2015 (2015-12-14)<br>paragraph [0033] | 2–5 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 April 2022** | **26 April 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/006805**

| Patent document cited in search report | Publication date (day/month/year) | Patent family member(s) | Publication date (day/month/year) |
|---|---|---|---|
| WO 2020/013112 A1 | 16 January 2020 | EP 3823067 A1<br>paragraphs [0049]-[0067], [0082], [0088], [0097]<br>CN 112335081 A | |
| JP 2015-225719 A | 14 December 2015 | US 2017/0092934 A1<br>paragraph [0087]<br>WO 2015/181865 A1<br>CN 106463729 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 62145655 A
- JP 2006196191 A
- JP 2007165273 A
- JP 2000336589 A
- WO 2006038863 A
- WO 2006031175 A
- WO 2012005677 A
- US 2680113 A